# EUROPEAN PATENT SPECIFICATION

(11) **EP 2 865 712 B1**
(45) Date of publication and mention of the grant of the patent: **03.08.2016**
(21) Application number: 14189297.6
(22) Date of filing: 17.10.2014
(51) Int. Cl.: C08L 21/00, B60C 15/00, C08L 7/00, C08L 9/00

(54) **VEGETABLE OIL BASED RUBBER CEMENT AND TIRE WITH FABRICATED TREAD**
AUF PFLANZENÖL BASIERENDER GUMMIZEMENT UND REIFEN MIT HERGESTELLTER LAUFFLÄCHE
CIMENT DE CAOUTCHOUC À BASE D'HUILE VÉGÉTALE ET PNEU COMPORTANT UNE BANDE DE ROULEMENT FABRIQUÉE

(30) Priority: 23.10.2013 US 201314060870
(43) Date of publication of application: 29.04.2015
(73) Proprietor: The Goodyear Tire & Rubber Company, Akron, Ohio 44316 (US)
(72) Inventor: Sandstrom, Paul Harry, Cuyahoga Falls, OH Ohio 44223 (US)
(74) Representative: Kutsch, Bernd

(56) References cited:
- EP-A1- 1 329 478
- EP-A1- 2 657 262
- US-A1- 2004 127 617

## Description

### Field of the Invention

This invention relates to a cement for use with a tire tread and a tire with circumferential tread of a rubber which contains a reinforcing filler preferably comprising precipitated silica. The circumferential rubber tread is configured as a rubber strip having its ends joined together to form a splice with a vegetable oil based rubber cement there between. The vegetable oil based rubber cement may contain a silica coupling agent. The vegetable oil may comprise soybean oil. The invention further relates to a method of preparing a tire with such circumferential spliced tread.

### Background of the Invention

Rubber tires are often prepared in a manufacturing process which comprises applying an uncured rubber tread strip circumferentially around a tire carcass with ends of the rubber strip meeting and joined together to form a splice. In one embodiment, the ends of the uncured rubber tread strip may be skived, or cut at an angle, to permit the ends of the uncured rubber strip to overlay (overlap) each other to form the splice. An adhesive, also referred to as a cement, may be applied to at least one end of the uncured tread rubber strip to secure the splice for the tire building and shaping processes. Such tread fabrication utilizing a splice to join the ends of an uncured tread rubber strip with an adhesive, hereinafter referred to as a cement, between its ends at the splice is as such well known to those having skill in such art.

Historically, carriers for such cements have heretofore been, for example, volatile organic solvents, petroleum-based oils or water. Each of such carriers presents advantages and disadvantages.

Significantly, high contents of silica or precipitated silica reinforcement in the tread rubber typically "dries the uncured rubber" in a sense of adversely reducing its tack.

Here, it is desired to provide and use a cement to promote uncured rubber surface tack for tire building and shaping purposes (e.g. in a sense of holding the tread splice together). It may also be desired to promote cured adhesion at the tread splice between ends of the cured rubber tread.

In one aspect, for high performance intended tire treads, the uncured elastomers may have a high viscosity (e.g. elastomers with high Mooney viscosities) which renders them difficult to process in rubber processing equipment. For such high viscosity elastomers, at least one of petroleum based oil and vegetable oil may be blended with the elastomer during its manufacture. Such elastomers are often referred to as being oil extended or as oil extended elastomers.

As indicated, it is desirable for the cement to provide building tack for the uncured rubber strip to secure the splice during the building and molding of the tire and may be desired to provide improved cured adhesion to secure the splice for the cured rubber tread of the cured rubber tire. For example, see US-B2-8,143,338.

Further examples of various cements for joining tread splices can be found in US-A-3,335,041, US-A-3,421,565, US-A-3,342,238, US-A-3,514,423, US-A-4,463,120, US-A-4,539,365, US-A-5,503,940 and US-A-5,951,797.

As indicated, historically, various cements for tire tread splices have been organic solvent based, petroleum oil based and water based cements with a primary purpose of providing building tack to secure the uncured tread splice during the building and shaping of the tire. For example, such cement may comprise a base rubber, hydrocarbon oil, carbon black, tackifier resin and sometimes a curative.

However, as indicated, tread rubber compositions containing a significant content of silica reinforcement typically adversely reduces building tack for the uncured rubber composition. Therefore, alternate methods for providing building tack are sought for the uncured tread rubber splice, which may also include providing cured adhesion for the cured tread rubber splice.

Vegetable oil (a triglyceride oil), such as for example soybean oil based cement is proposed instead of the aforesaid petroleum hydrocarbon, organic solvent and water based cements.

Further, a vegetable oil based cement containing a silica coupling agent for the silica in the tread rubber composition is proposed to promote cured adhesion of the tread splice.

It is important to appreciate that vegetable oils, including soybean oil, differ significantly from petroleum based oils, particularly in a sense that vegetable oils are triglycerides which contain a significant degree of unsaturation and are clearly not a linear or an aromatic petroleum based oil.

The vegetable oils (triglyceride oils) include soybean oil, sunflower oil and canola oil which are in the form of esters containing a significant degree of unsaturation. For informational purposes to illustrate the aforesaid of relative saturated, mono unsaturated and polyunsaturated contents of various vegetable oils, the following Table A is provided.

**Table A**

| Vegetable Oil Unsaturated | Percent Saturated | Percent Mono Unsaturated | Percent Poly |
|---|---|---|---|
| Soybean | 16 | 23 | 58 |
| Sunflower | 10 | 45 | 40 |
| Canola (Rapeseed) | 7 | 63 | 28 |
| Corn | 13 | 28 | 55 |
| Coconut | 87 | 6 | 2 |
| Cottonseed | 26 | 18 | 52 |
| Olive | 14 | 73 | 11 |
| Palm | 49 | 37 | 9 |
| Peanut | 17 | 46 | 32 |
| Safflower | 10 | 45 | 40 |

It can readily be seen that such vegetable oils, such as for example, soybean oil, contain a significant unsaturation content which is not present in petroleum based rubber processing oils.

Therefore, substituting a vegetable oil, for example soybean oil, for petroleum based oil in an adhesive cement for an uncured tread strip splice is a significant change and particularly when used as a cement for tread strip rubber composition containing high concentrations of precipitated silica reinforcing filler.

A significant challenge exists for providing building tack for an uncured tread rubber splice where its rubber composition contains a high content of silica or precipitated silica, particularly where the silica content may significantly exceed the content of rubber reinforcing carbon black and where the silica concentration may exceed the concentration of the elastomer itself in the rubber composition.

The challenge may particularly exist where the precipitated silica is a hydrophobated precipitated silica, namely a pre-hydrophobated silica.

It is to be appreciated that silica and in particular precipitated silica (an amorphous synthetic silica) is hydrophilic in nature and thereby challenging to efficiently blend with and disperse within diene-based elastomers unless it is made more hydrophobic in nature, a subject understood to be well known to those having skill in such art. Such hydrophilic precipitated silica may, for example, be hydrophobated in situ within the rubber composition or may be pre-hydrophobated prior to its addition to a rubber composition. For example, see US-A-4,474,908, US-A-5,780,538, US-B-6,127,468 and US-B-6,573,324

The precipitated silica may be hydrophobated for example, with one or more hydrophobation promoting compounds which are reactive with hydroxyl groups (e.g. silanol groups) contained on the precipitated silica which may comprise, for example one or more of alkoxysilane, alkylsilane, halogenated alkylsilane, and silica coupling agents such as, for example, bis(3-trialkoxysilylalkyl) polysulfide containing an average in a range from 2 to 4 connecting sulfur atoms in their polysulfidic bridges (e.g. comprising bis(3-tri ethoxysilylpropyl) polysulfide, or an organoalkoxymercaptosilane.

Such hydrophobation promoting compounds rely, at least in part, upon reaction of its silane or siloxane moiety with hydroxyl groups (e.g. silanol groups) on the precipitated silica. For such reaction, it is understood that not all of the hydroxyl groups of the precipitated silica become chemically interacted with such compounds and that therefore a portion of the hydroxyl groups on the precipitated silica remain as available hydroxyl groups for further chemical reaction(s).

In one embodiment, it is desired to undertake providing building tack to the ends of such uncured rubber tread strip which contains a high content of precipitated silica, where the precipitated silica may be a hydrophobated precipitated silica, such as, for example, an uncured tread rubber strip comprising a rubber composition having a silica or precipitated silica or hydrophobated precipitated silica content of at least 50 parts by weight, alternately at least 75 parts by weight, alternately at least 105 parts by weight and alternately at least 175 parts by weight, per 100 parts by weight elastomer(s) (e.g. at least 50, 70, 105 and 175 phr of the silica).

Where the cement also contains a silica coupling agent, it is desired for the cement to interact with the silica, which may be a hydrophobated precipitated silica, to both provide building tack for the uncured rubber splice as well to provide adhesion for the cured rubber splice.

While this invention relates to promoting both uncured rubber building tack and cured rubber adhesion of ends of a silica containing rubber tread strip at a tread splice with the cement of this invention for the building of a tire, it is to be appreciated that building tack and cured adhesion for other silica containing rubber components may be promoted by application of the cement of this invention to a surface of such components.

In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art.

EP-A-1 329 478 describes a tire tread rubber composition comprising natural rubber, butyl rubber, carbon black, silica, a silane coupling agent and an oil of linseed, soya beans, corn, rapeseed, palm or coconut.

US-A-2004/0127617 describes a tire tread rubber composition comprising styrene-butadiene rubber, butyl rubber, silica, carbon black, a coupling agent, sulfur and an accelerator as well as sunflower oil, rapeseed oil or linseed oil.

EP-A-2 657 262, which has been published only after the priority date of this application, describes a triglyceride containing solution polymerization prepared styrene/butadiene elastomer and a tire with a respective component. The rubber composition may comprise soybean oil, precipitated silica, a sulfur curative and sulfur.

### Summary and Practice of the Invention

The invention relates to a tire in accordance with claim 1.

Dependent claims refer to preferred embodiments of the invention.

In one aspect of the invention, the cement provides building tack to spliced ends of a precipitated silica containing tire tread rubber strip wherein the cement comprises at least one of soybean oil and canola oil, conjugated diene based elastomer, sulfur curative and optionally at least one of hydrocarbon resin and silica coupling agent.

The tire which contains the circumferential tread comprising the tread rubber strip with its ends spliced together to form a splice with the cement between the ends of the tread rubber ends at the splice.

The cement is provided for promoting building tack for an uncured rubber composition of a tread rubber strip and contains at least one conjugated diene based elastomer and precipitated silica reinforcement, wherein said cement comprises vegetable oil, at least one conjugated diene based elastomer and sulfur curative, wherein said diene-based elastomer for said cement comprises at least one of polymers of at least one of isoprene and 1,3-butadiene and copolymer of styrene with at least one of isoprene and 1,3-butadiene, wherein said sulfur curative comprises sulfur and at least one sulfur cure accelerator, and wherein said vegetable oil comprises at least one of soybean oil and canola oil.

Preferably, the vegetable oil comprises soybean oil.

Optionally, and most desirably, the cement contains a silica coupling agent having a moiety reactive with hydroxyl groups on said precipitated silica and another different moiety interactive with said diene-based elastomer(s) contained in said tread rubber strip.

In one embodiment, said precipitated silica comprises a precipitated silica hydrophobated with (pre-treated with):
(A) at least one silica coupling agent comprising:
   (1) bis (3-trialkoxysilylalkyl) polysulfide containing an average from 2 to 4 connecting sulfur atoms in its polysulfidic bridge (e.g. comprising bis(3-triethoxysilylpropyl) polysulfide), or
   (2) alkoxyorganomercaptosilane, and optionally;
(B) at least one alkoxysilane, and
(C) combination of said silica coupling agent and alkoxysilane.

Preferably, the cement contains at least one hydrocarbon resin (e.g. from 0.5 to 30 parts by weight resin per 100 parts by weight conjugated diene-based elastomer(s)). Representative of such resin is, for example, at least one of coumarone-indene resin, petroleum derived resin, terpene resin and rosin acid and rosin acid derivatives.

The cement may contain a filler comprising carbon black or rubber reinforcing carbon back (e.g. from 5 to 100 parts rubber reinforcing carbon black per 100 parts by weight conjugated based elastomer(s) in said cement).

Desirably, the cement is used without containing silica or precipitated silica, although, where appropriate or desired, it may contain from about 5 to about 30 parts by weight of silica or precipitated silica per 100 parts by weight elastomer (phr).

Optionally, the cement contains up to 30, alternately up to 10, percent by weight petroleum oil based on the total of said vegetable oil and petroleum oil.

The tread rubber strip contains from 50 to 200, alternately from 75 to 150, alternately from 105 to 175 and alternately from 175 to 200, parts of precipitated silica per 100 parts of diene-based elastomer(s) in said tread rubber strip.

Therefore, it is appreciated that, where the content of precipitated silica in said tread rubber strip is in a range of from about 105 to about 175 parts by weight per 100 parts by weight diene-based elastomer(s), the content of precipitated silica in said tread rubber strip may be greater than the content of diene-based elastomer in the rubber composition.

In one embodiment, said cement and uncured rubber strip are co-cured together to form a cured rubber splice.

In accordance with this invention, a tire is provided having a circumferential rubber tread comprising an uncured rubber strip having its ends spliced together to form a splice with a said cement provided as a layer between its ends in said splice, where the uncured rubber strip is a rubber composition comprising at least one conjugated diene-based elastomer, precipitated silica and sulfur curative.

In one embodiment, the tire is provided with the cement and said tread rubber strip sulfur co-cured together to form a cured rubber tread splice.

Additionally, a method of preparing a tire is disclosed, the method comprising:
(a) building a rubber tire having with a rubber tread comprising an uncured tread rubber strip of a rubber composition comprising at least one conjugated diene-based elastomer, precipitated silica and sulfur curative,
(B) splicing the ends of said circumferential tread rubber strip together with said cement applied to at least one end of said tread rubber strip and thereby contained between the ends of said tread rubber strip at the splice, and
(c) Sulfur co-curing said uncured rubber strip and cement together.

In one embodiment of this invention, said precipitated silica for said tread rubber strip is a precipitated silica pre-treated with said silica coupler prior to addition to said rubber composition,

In one aspect of the invention, the rubber reinforcing carbon black, and optional hydrocarbon resin is provided in said cement to promote said building tack and increasing green strength of the cement and ultimately promoting sulfur cured strength of the cement at the tread strip splice in the cured tire.

While the vegetable oil is the carrier for ingredients of the cement, it can comprise, if desired and appropriate, up to 30 weight percent petroleum based hydrocarbon oil, although it is usually desired that the vegetable oil is used without the presence of a petroleum based hydrocarbon oil. Therefore, it may desired for the cement to be substantially free of petroleum based oil in the sense of being exclusive of, or containing less than 10 weight percent petroleum oil, based on the oil itself.

In one embodiment, the conjugated diene-based elastomer in the vegetable oil based cement comprises at least one of cis, 1,4-polyisoprene, cis 1,4-polybutadiene, and styrene/butadiene copolymers.

Said vegetable oil comprises at least one of soybean oil and canola oil.

As indicated, in one embodiment said vegetable oil comprises soybean oil.

As indicated, in one embodiment, the cement contains from 0.5 to 30 phr of the hydrocarbon resin comprising at least one of coumarone-indene resin, petroleum derived resin, terpene resin and rosin acid and derivatives and mixtures thereof.

Coumarone-indene resins are commercially available in many forms with melting points ranging from 10°C to 160°C (as measured by the ball-and-ring method). Preferably, the melting point ranges from 30°C to 100°C.

Hydrocarbon resins are, in general, petroleum resins commercially available with softening points ranging from 10°C to 120°C. Desirably, the softening point ranges from 30°C to 100°C. Suitable petroleum resins include both aromatic and non-aromatic resins. Several types of petroleum resins are available. Some resins have a low degree of unsaturation and high aromatic content, whereas some are highly unsaturated and yet some contain no aromatic structure at all. Differences in the hydrocarbon resins are largely due to the olefins in the feedstock from which the resins are derived. Conventional derivatives in such resins include dicyclopentadiene, cyclopentadiene, their dimers and diolefins such as isoprene and piperylene.

Terpene resins are produced, for example, by polymerizing beta pinene which may be contained in mineral spirits. The resin may be provided in a variety of melting points ranging, for example, from 10°C to 135°C. The terpene resin may also, for example, be a copolymer of beta pinene and diclopentadiene.

Phenol/acetylene resins may be used. Phenol/acetylene resins may be derived, for example, by the addition of acetylene to an alkyl phenol such as for example butyl phenol, in the presence of, for example, zinc naphthlate.

Historically, rosin acid resin, which might sometimes be referred to as "rosin", is a solid resinous material (at 23°C) which contains a high concentration of carboxylic acid groups which occurs naturally in pine trees. There are three major exemplary sources of the rosin acid which might be referred to as gum, wood and tall oil rosin.

Gum rosin acid, which might be referred to as "rosin", is typically from the oleoresin extrudate of the living pine tree.

Wood rosin acid, which might be referred to as "wood rosin" or "rosin", is typically from the oleoresin contained in the aged pine tree stumps.

Tall oil rosin acid, which might be referred to as "rosin", is typically from the waste liquor recovered as a by-product in the paper production industry. For example, wood rosin may be obtained from aged pine tree stumps. In such practice, a pine tree stump may be allowed to remain in the ground for a number of years so that its bark and sapwood may decay and slough off to leave the heartwood rich in rosin acid, which might sometimes be referred to as "wood rosin". Historically, rosin acids derived from both oleoresin and aged pine tree stump wood are typically composed of, for example, about 90 percent rosin acids and, for example, about 10 percent nonacidic components.

Representative of various wood rosin acids are, for example, rosin acids referred to as abietic, levopimaric, neoabietic, palustric, dehydroabietic, dihydroabietic, tetrahydroabietic, pimaric, isopimaric, elliotinoic and sandaracopimaric.

A significant aspect of the invention is the use said vegetable oil (e.g. soybean oil) in the cement.

The diene based elastomer(s) for the tread rubber strip comprise at least one polymer of at least one of isoprene and 1,3-butadiene and styrene with at least one of isoprene and 1,3-butadiene.

As indicated, representative of such elastomers is, for example, cis 1,4-polyisoprene, cis 1,4-polybutadiene, styrene/butadiene, isoprene/ butadiene and isoprene/butadiene/styrene polymers or elastomers.

In one embodiment, an elastomer (e.g. a styrene/butadiene rubber) may be a tin or silicon coupled elastomer. In one embodiment, an elastomer may be a functionalized elastomer (e.g. a styrene/butadiene rubber) containing, for example, at least one functional group comprising at least one of amine, siloxy, carboxyl and hydroxyl groups, particularly functional groups. Such functional groups may be reactive with, for example, hydroxyl groups on a precipitated silica, particularly on said hydrophobated precipitated silica.

In one embodiment, an elastomer may be a tin or silicon coupled elastomer (e.g. a styrene/butadiene rubber) containing at least one functional group comprising, for example, amine, siloxy, carboxyl and hydroxyl groups. Such functional groups may be reactive with hydroxyl groups of a precipitated silica, particularly said hydrophobated precipitated silica.

The commonly employed precipitated silica reinforcement may be, for example, a precipitated silica formed by the acidification of a soluble silicate, e.g., sodium silicate. Such conventional silicas might be characterized, for example, by having a BET surface area, as measured using nitrogen gas. In one embodiment, the BET surface area may be in the range of 40 to 600 square meters per gram. In another embodiment, the BET surface area may be, for example, in a range of 80 to 300 square meters per gram.

Various commercially available silicas may be used, such as, and without limitation, silicas commercially available from PPG Industries under the Hi-Sil trademark with designations 210 and 243, silicas available from Rhodia, with, for example, designations of Z1165MP and Z165GR, and silicas available from Evonik with, for example, designations VN2 and VN3.

Commonly employed carbon blacks can be used in the cement composition in an amount ranging from 30 to 70 phr. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

The vegetable oil (e.g. soybean oil) based adhesive (cement) may be applied to the surface of the ends of the uncured tread rubber strip using any of the various application methods as are known in the art including spraying, brushing, dipping, and wiping.

## Claims

1. A tire having a rubber tread comprising an uncured circumferential tread rubber strip of a rubber composition comprising at least one conjugated diene-based elastomer, 50 to 200 parts by weight of precipitated silica per 100 parts by weight conjugated diene based elastomer in the tread strip and a sulfur curative, the uncured circumferential tread rubber strip having its ends spliced together with a cement contained between the ends of the tread rubber strip at the splice, wherein the cement comprises at least one of soybean oil and canola oil, at least one conjugated diene based elastomer and a sulfur curative, wherein the diene-based elastomer of the cement comprises at least one of polymers of at least one of isoprene and 1,3-butadiene and copolymer of styrene with at least one of isoprene and 1,3-butadiene, and wherein said cement sulfur curative comprises sulfur and at least one sulfur cure accelerator.

2. The tire of claim 1 wherein the cement contains a silica coupling agent having a moiety reactive with hydroxyl groups on the precipitated silica in the uncured tread rubber strip.

3. The tire claim 1 or 2 wherein the cement contains at least one hydrocarbon resin.

4. The tire of at least one of the previous claims wherein the cement contains a silica coupling agent having a moiety reactive with hydroxyl groups on the precipitated silica in the uncured tread rubber strip and another different moiety interactive with the conjugated diene-based elastomer(s) in the uncured tread rubber strip.

5. The tire of at least one of the previous claims wherein the cement further contains a filler comprising carbon black or wherein the cement comprises from 5 to 100 parts by weight of carbon black per 100 parts by weight of the diene-based elastomer in the cement.

6. The tire of at least one of the previous claims wherein the cement contains up to 30 weight percent petroleum oil, alternatively 0 to 10 weight percent petroleum oil, based on the total of soybean oil and canola oil and petroleum oil.

7. The tire of at least one of the previous claims wherein the hydrocarbon resin is at least one of coumarone-indene resin, petroleum derived resin, terpene resin, rosin acid and rosin acid derivatives.

8. The tire of at least one of the claims 1 to 7 wherein the tire is a cured tire and wherein the cement and the tread rubber strip are sulfur co-cured together to form a cured rubber splice.

## Patentansprüche

1. Reifen mit einer Kautschuklauffläche, umfassend einen unvulkanisierten umfangsgerichteten Laufflächenkautschukstreifen aus einer Kautschukzusammensetzung, umfassend mindestens ein Elastomer auf Basis konjugierten Diens, 50 bis 200 Gewichtsteile ausgefälltes Silika je 100 Gewichtsteile Elastomer auf Basis konjugierten Diens in dem Laufflächenstreifen, und ein Schwefelvulkanisationsmittel, wobei die Enden des unvulkanisierten umfangsgerichteten Laufflächenkautschukstreifens mit einem zwischen den Enden des Laufflächenkautschukstreifens an der Spleißstelle enthaltenen Zement miteinander verspleißt sind, wobei der Zement mindestens eines von Sojaöl und Rapsöl, mindestens ein Elastomer auf Basis konjugierten Diens, und ein Schwefelvulkanisationsmittel umfasst, wobei das dienbasierte Elastomer des Zements mindestens eines von Polymeren von mindestens einem von Isopren und 1,3-Butadien und Copolymer von Styrol mit mindestens einem von Isopren und 1,3-Butadien umfasst, und wobei das Zement-Schwefelvulkanisationsmittel Schwefel und mindestens einen Schwefelvulkanisationsbeschleuniger umfasst.

2. Reifen nach Anspruch 1, wobei der Zement einen Silikahaftvermittler mit einem Anteil, der mit Hydroxylgruppen an dem ausgefällten Silika in dem unvulkanisierten Laufflächenkautschukstreifen reaktiv ist, enthält.

3. Reifen nach Anspruch 1 oder 2, wobei der Zement mindestens ein Kohlenwasserstoffharz enthält.

4. Reifen nach mindestens einem der vorhergehenden Ansprüche, wobei der Zement einen Silikahaftvermittler enthält, der einen Anteil, der mit Hydroxylgruppen an dem ausgefällten Silika in dem unvulkanisierten Laufflächenkautschukstreifen reaktiv ist, und einen anderen, verschiedenen Anteil, der mit dem bzw. den Elastomer(en) auf Basis konjugierten Diens in dem unvulkanisierten Laufflächenkautschukstreifen in Wechselwirkung tritt, aufweist.

5. Reifen nach mindestens einem der vorhergehenden Ansprüche, wobei der Zement weiter einen Carbon Black umfassenden Füllstoff enthält, oder wobei der Zement 5 bis 100 Gewichtsteile Carbon Black je 100 Gewichtsteile des dienbasierten Elastomers in dem Zement umfasst.

6. Reifen nach mindestens einem der vorhergehenden Ansprüche, wobei der Zement bis zu 30 Gewichtsprozent Mineralöl, alternativ 0 bis 10 Gewichtsprozent Mineralöl, auf Basis der Gesamtmenge von Sojaöl und Rapsöl und Mineralöl, enthält.

7. Reifen nach mindestens einem der vorhergehenden Ansprüche, wobei das Kohlenwasserstoffharz mindestens eines von Cumaron-Inden-Harz, von Mineralöl abgeleitetem Harz, Terpenharz, Harzsäure und Harzsäurederivaten ist.

8. Reifen nach mindestens einem der Ansprüche 1 bis 7, wobei der Reifen ein vulkanisierter Reifen ist und wobei der Zement und der Laufflächenkautschukstreifen miteinander covulkanisiert werden, um eine vulkanisierte Kautschukspleißstelle zu bilden.

## Revendications

1. Bandage pneumatique possédant une bande de roulement en caoutchouc comprenant une bande de caoutchouc faisant office de bande de roulement circonférentielle non vulcanisée possédant une composition de caoutchouc comprenant au moins un élastomère à base d'un diène conjugué, de 50 à 200 parties en poids de silice précipitée par 100 parties en poids d'un élastomère à base d'un diène conjugué dans la bande faisant office de bande de roulement et un adjuvant de vulcanisation au soufre, les extrémités de la bande de caoutchouc faisant office de bande de roulement circonférentielle à l'état non vulcanisé étant jointes par coupe biaisée avec un ciment contenu entre les extrémités de la bande de caoutchouc faisant office de bande de roulement à la jonction par coupe biaisée, dans lequel le ciment comprend au moins une huile choisie parmi l'huile de soja et l'huile de colza, au moins un élastomère à base d'un diène conjugué et un adjuvant de vulcanisation au soufre, dans lequel l'élastomère à base diénique du ciment comprend au moins un polymère choisi parmi l'isoprène et le 1,3-butadiène et un copolymère de styrène avec au moins un polymère choisi parmi l'isoprène et le 1,3-butadiène, et dans lequel ledit adjuvant de vulcanisation au soufre du ciment comprend du soufre et au moins un accélérateur de la vulcanisation au soufre.

2. Bandage pneumatique selon la revendication 1, dans lequel le ciment contient un agent de couplage pour la silice possédant une fraction apte à réagir avec les groupes hydroxyle sur la silice précipitée dans la bande de caoutchouc faisant office de bande de roulement à l'état non vulcanisé.

3. Bandage pneumatique selon la revendication 1 ou 2, dans lequel le ciment contient au moins une résine d'hydrocarbure.

4. Bandage pneumatique selon au moins une des revendications précédentes, dans lequel le ciment contient un agent de couplage pour la silice possédant une fraction apte à réagir avec les groupes hydroxyle sur la silice précipitée dans la bande de caoutchouc faisant office de bande de roulement à l'état non vulcanisé et une autre fraction différente apte à entrer en interaction avec l'élastomère ou les élastomères à base de diènes conjugués dans la bande du caoutchouc faisant office de bande de roulement à l'état non vulcanisé.

5. Bandage pneumatique selon au moins une des revendications précédentes, dans lequel le ciment contient également une matière de charge comprenant du noir de carbone ou bien dans lequel le ciment comprend de 5 à 100 parties en poids de noir de carbone par 100 parties en poids de l'élastomère à base d'un diène conjugué dans le ciment.

6. Bandage pneumatique selon au moins une des revendications précédentes, dans lequel le ciment contient jusqu'à 30 % en poids, de l'huile de pétrole, en variante de 0 à 10 % en poids d'huile de pétrole, basés sur le total de l'huile de soja, de l'huile de colza et de l'huile de pétrole.

7. Bandage pneumatique selon au moins une des revendications précédentes, dans lequel la résine d'hydrocarbure représente au moins une résine choisie parmi une résine de coumarone-indène, une résine qui dérive du pétrole, une résine terpénique, de l'acide résinique et des dérivés de l'acide résinique.

8. Bandage pneumatique selon au moins une des revendications 1 à 7, dans lequel le bandage pneumatique est un bandage pneumatique vulcanisé et dans lequel le ciment et la bande faisant office de bande de roulement sont soumis à une vulcanisation conjointe au soufre pour obtenir un joint en caoutchouc vulcanisé en forme de coupe biaisée.
